# EUROPEAN PATENT APPLICATION

(11) **EP 4 575 373 A1**
(43) Date of publication of application: **25.06.2025**
(21) Application number: 23474001.7
(22) Date of filing: 20.12.2023
(51) Int. Cl.: F28D 20/00, F28F 21/04, F28F 21/08

(54) **HYBRID THERMAL ENERGY STORAGE WITH OILY SLUDGES AND MILL SCALE FROM STEELWORKS**

(71) Applicant: MS THERM s.r.o., 040 01 Kosice - mestska as Juh (SK)
(72) Inventor: Spirková, Daniela, 841 02 Bratislava (SK); Bereznanin, Samuel, 040 01 Kosice (SK); Slavomír, Filip, 040 01 Kosice (SK); Murajda, Tomás Andrej, 831 04 Bratislava (SK); Badida, Miroslav, 040 01 Kosice (SK)

(57) **Abstract**

A hybrid thermal storage system (1) comprises one or more sections (2). Each section is encased in concrete (21) and includes integrated pipe bundles (22), a thermal insulation envelope (23), and an opening (24) for manipulating the thermal energy storage material (3) and heat sources (4). The section is filled with oily mill scale waste from steelworks (3).

Charging systems (4) consist of either plate or spiral pipe systems (41), centrally positioned within the heat storage material (3) for waste heat flows, or direct electric heating elements (42) for electrical energy surpluses.

On the top of opening is installed drum (5) with filter (51) for evaporation of water residuals and exhaust to atmosphere (52).

Thermal sensors are placed in various zones: within the concrete casing (T1, T2, T3, T4), in the storage material (T5, T6), at the charging loop (T7, T8) and discharging loop (T9, T10), of thermal energy flows, and at the source of thermal energy from direct electric heating.

Optimization is achieved through a control system (6) that gathers data from thermal sensors and external systems. This system evaluates the optimal economic conditions for the operation of thermal energy storage and manages the process of discharging and charging the accumulator with the hybrid possibility of operation, involving both waste heat flows (41) and electrical energy surpluses (42).

These pipe bundles may have various geometries. Sludge-like sediments are placed in individual sections without any modification, serving as the primary material for storing thermal energy with high thermal capacity and conductivity. Heat sources, either plate or spiral pipe systems, or resistive electric elements for storing surplus electrical energy into heat, are immersed in the sludges in the sections, or a hybrid combination of both.

The secondary material is the concrete casing of the sections, which is enveloped in an insulating layer to prevent heat leakage. The hybrid accumulator is complemented by a control system that, based on data from thermal sensors in the sections, environmental data, forecast, simulation, and energy consumption requirements, manages the process of discharging and charging the accumulator. Individual sections can operate at different thermal levels, effectively combining high-temperature storage with low-temperature storage.

## Description

### FIELD OF INVENTION

Invention relates to a method and a use of thermal storage system based on use of technological waste produced in ferrous iron and steel industry. Particularly invention use for heat storage oily mill scale sludges produced from various steelmaking operations (casting, rolling) with high content of the iron.

### STATE OF ART

The iron and steel industry represents the most greenhouse gas intensive industry, where achieving maximum utilization of renewable energy sources and energy efficiency is crucial. Currently, numerous innovations are being implemented in the iron and steel industry, aiming at decarbonization, reducing the environmental impact of production, and ensuring long-term sustainability.

All new innovations in the iron and steel industry increase the demands on electricity consumption management. Primarily, the use of renewable energy sources and the transition to electric furnaces create the need for solutions in energy storage. Equally important is the consistent utilization of waste heat from various processes in iron and steel production, which also exhibit fluctuation characteristics. All these processes occur at either high temperatures or significant deviations, further increasing the investment requirements for technical solutions in storing large quantities of energy.

The production in the metallurgical industry is closely linked to the generation and management of generated waste. To utilize and recycle these by-products, a whole range of innovations has emerged. However, the need to dispose of oil from these sludges still represents a significant cost, whether through washing with chemical additives, incineration, sintering, or direct addition to the process. Challenges persist with these solutions, either in terms of economic costs or the possibilities for the utilization of treated sludges.

Solutions in the field of designing thermal energy storage aim to enable the accumulation of thermal energy at large capacities and optimal costs, focusing primarily on available materials and methods that utilize solid material as a medium for storing sensible heat. This is evident in patent documents such as WO2016l099920A1, WO2016099290A1, and others. Methods and the utilization of sensible heat with sand are also described in patent documents like WO 2020/136456A1. Solid material for heat accumulation is also detailed in the patent application EP4043416A1. All these solutions are geared towards realizing a thermal energy storage system with an optimal balance of thermal capacity, thermal conductivity, chemical stability, density, and costs. The main barrier to use alloys or other steel material is their cost and them method for utilizing this material for large quantities.

Equally crucial in the design of materials for thermal energy storage systems are the methods employed constructing the thermal energy storage and integration of the heat accumulation into energy systems, as described in patent documents such as EP3922939A1 or EP3985340A1.

Thermal energy storage can be integrated into the energy grid in various ways, including the reuse of heat in industrial processes, especially in industrial applications or for centralized heating systems. The most flexible integration of the accumulator is its use in conjunction with electricity generation. Another area of integration involves the possibility of transporting stored heat in thermal energy storage to a remote location, what is limited by distance and the technical design of the system.

Charging and discharging the accumulator depend on several factors, with the safety and reliability of operation being crucial. In general, achieving a higher temperature of accumulation can ensure higher efficiency in electricity generation. The development in the field of thermal energy storage using molten salts for concentrated solar power plants serves as a suitable example in this regard.

Utilizing accumulated thermal energy for electricity generation, especially in Organic Rankine Cycle (ORC) systems, represents an effective way to optimize performance. The accumulator plays a crucial role in ensuring the optimal performance of the ORC unit in case of fluctuation waste heat flows. This solution helps reduce the need to cover the maximal power peaks of waste heat recovery and, at the same time, extends the utilization of the installed power source, positively impacting the economic return on investment.

Invention addresses the solution through the incorporation of elements from the circular economy. Our research has identified wastes, derived from the very process they are transforming, as the optimal material for thermal energy accumulation due to their high conductivity, capacity, and negative cost. This innovative approach not only maximizes the utilization of these waste materials but also contributes to a sustainable and efficient solution in the energy transformation process.

### Summary of the invention

Thermal energy storage of sensible heat using liquid and solid materials is well-established in the field, with water, hot rocks, stone, concrete, sand, and similar materials commonly employed for this purpose.

This invention addresses the challenges associated with materials characterized by high conductivity and capacity based on iron, overcoming barriers that have impeded their effective application. Our innovation introduces a novel heat accumulation method that not only facilitates the creation of high-capacity heat reservoirs but also pioneers innovative hybrid accumulation methods for simultaneous connection to both thermal and electrical networks.

The design of the accumulator optimizes the benefits of oily mill scale by streamlining construction and ensuring direct contact between the heat exchange surfaces or electrical heaters and the accumulator material.

In constructing the accumulator with oily mill scale, its oily nature is deliberately utilized to simplify the construction process. The heat exchanger exchange surfaces, supplying heat or electrical direct heating elements, are directly immersed in the oily mill scale, establishing direct contact between the material of the heat exchangers or electrical heaters and the accumulator material. Due to the high thermal conductivity, specific requirements for the geometry of the exchange surfaces are unnecessary, and their centrally positioned location in the section formed by a concrete casing with integrated bundles of pipes for heat extraction from the accumulator is sufficient.

Concrete walls function as a secondary accumulator material, primarily serving as a robust casing for housing the mill scale. Simultaneously, they provide a platform for installing a heat exchange surface in the form of bundles of pipes within their structure for discharging the accumulator into a suitable medium, depending on the method of application of the recovered heat (hot water, thermal oil, steam). On top of the opening, a drum with a filter is installed for the evaporation of water residuals and exhaust to the atmosphere, enhancing the efficiency and environmental sustainability of the system. This innovative integration not only maximizes the benefits of mill scale waste but also ensures a robust and efficient thermal energy storage system with versatile applications for sustainable energy management.

The energy storage accumulation, with operating temperatures reaching up to 450°C, significantly reduces the water content in oily sludges in each cycle. This process preserves the integrity of the oily mill scale and enhances its thermal heat conductivity and thermal stability, thereby enabling subsequent regeneration of the oily mill scale, if possible and needed as any methods for regeneration, physical, chemical, or biological methods assume in first step the removal of excess moisture.

High thermal conductivity, coupled with high density and the ability to accumulate at high temperature gradients (e.g., 100 K or more), allows storing significantly larger amounts of energy compared to water-based thermal storage on a per cubic meter basis.

Thermal conductivity is excellent property of material used for thermal energy storage. We can compare different material as can be seen in Table 1.

**Table 1**

| **Material** | **Specific Heat Capacity (J/kg-K)** | **Thermal Conductivity (W/m·K)** |
|---|---|---|
| **Water** | 4186 | 0.6 |
| **Oil** | 2000 | 0.25 |
| **Concrete** | 840 | 0.84 |
| **Iron** | 450 | 80 |
| **Sand** | 840 | 0.84 |
| **Oily Mill Scale with High Water Content** | 1500 - 3500 | Varies (60) |
| **Oily Mill Scale with Low Water Content** | 1500 - 2500 | Varies (60) |

The values in the Table 1 for oily mill scale corresponds to 30% - 60% water content and 69 - 76% iron content with 3-7% oil in the dry matter.

This invention marks a significant advancement in integrating waste materials into thermal energy storage systems, contributing to a more sustainable and effective approach in the realm of energy management. This invention represents a significant advancement in the integration of waste materials into thermal energy storage systems, contributing to a more sustainable and effective approach in the realm of energy management.

### Brief description of drawings

In different figures identical parts are provided with same reference number.
Figure 1 presents a simplified top-view cross-section of a thermal energy storage system, providing schematic representations of various components such as the control system and charging and discharging systems. Together with other integral parts, these systems form a cohesive and integrated unit.
Figure 2 illustrates a simplified side view of the front section, providing a schematic representation of the charging and discharging system in accordance with an embodiment of the present invention. This includes the evaporation of water content in oily sludges and mill scale from steelworks during operation, along with the integrated installation of bundle pipes within the concrete wall and bottom. The top part of the containment serves as an opening, facilitating access to the storage system.
Figure 3 illustrates an example configuration with three sections that are parallelly connected to a waste heat stream (steam). Discharging occurs in a thermal oil loop, followed by the subsequent production of electricity in an ORC turbine.
Figure 4 illustrates an example configuration with eight sections that are parallelly connected to electricity network with their integrated electrical heating devices.

Discharging occurs in a thermal oil loop, followed by the subsequent supply of heat to district heating.

### Detail description

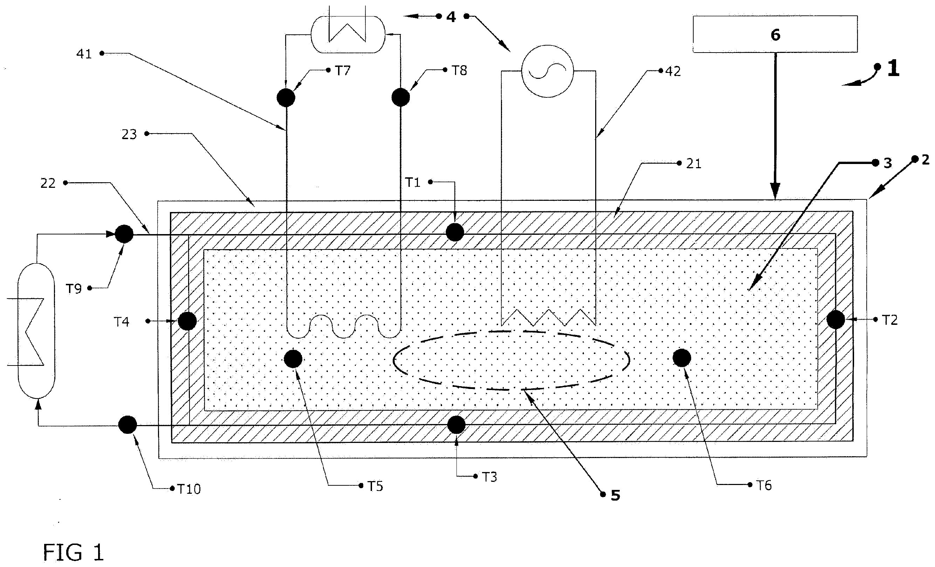

In Figure 1, the accumulator design is optimized to harness the benefits of oily mill scale waste (3), a material derived from steelworks processes. The oily nature of the mill scale is specifically utilized to simplify the construction of the accumulator (1). Heat exchanger exchange surfaces, responsible for supplying heat or electrical direct heating elements, are directly immersed in the mill scale (4). This direct contact exploits the high thermal conductivity of the material, eliminating specific requirements for the geometry of the exchange surfaces.

Concrete walls (21) serve a dual purpose within the accumulator system. Acting as a secondary accumulator material, these walls provide structural integrity while housing the oily mill scale (3). Simultaneously, they feature integrated bundles of pipes (22) for heat extraction from the accumulator, contributing to a streamlined and efficient design. The control system (6), depicted in Figure 1, gathers data from thermal sensors and external systems, optimizing technical and economic conditions for thermal energy storage operations in relation to temperatures (T1 ... T10) and external conditions.

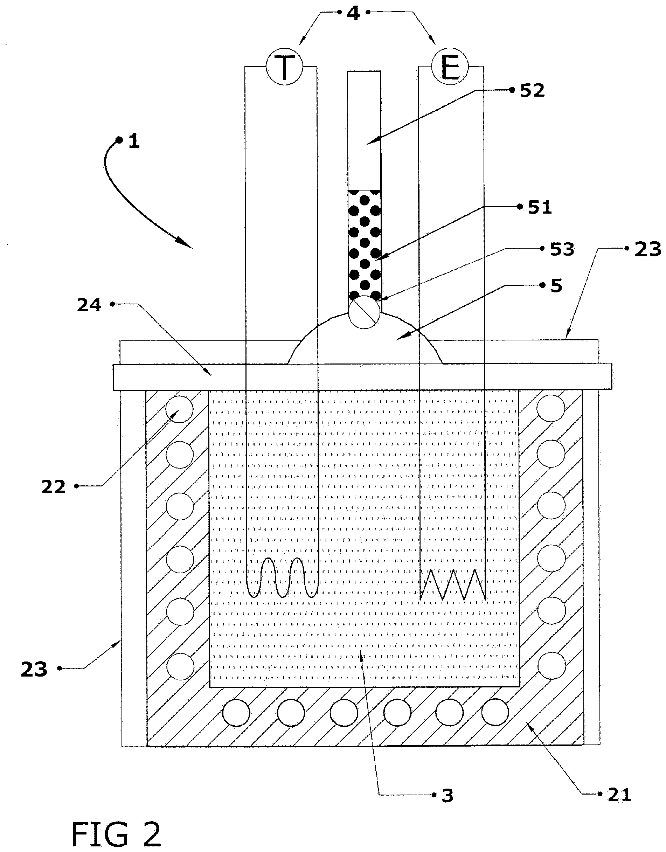

Figure 2 presents a simplified side view of the front section, offering a schematic representation of both the charging (4) and discharging system (22). This schematic includes the integration of bundle pipes within the concrete walls and the base of the containment structure. The upper part of the containment structure functions as an opening (21), providing convenient access to the storage system.

Additionally, the system features an operational evaporation system (5). This system plays a pivotal role in reducing the water content in oily sludges and mill scale, incorporating a built-in filter (51). The inclusion of the filter enhances the environmental conditions of operation and significantly contributes to the overall impact of the invention. By capturing impurities and particulates, the filter improves system efficiency, aligning with the invention's goal of sustainable and environmentally friendly thermal energy storage. Evaporation, serving as the initial stage of mill scale regeneration, further underscores the comprehensive and innovative approach of the entire system. Upon completion of the evaporation cycle, the exhaust stream (52) is closed (53) to prevent thermal energy losses, emphasizing the careful consideration of design elements in the invention.

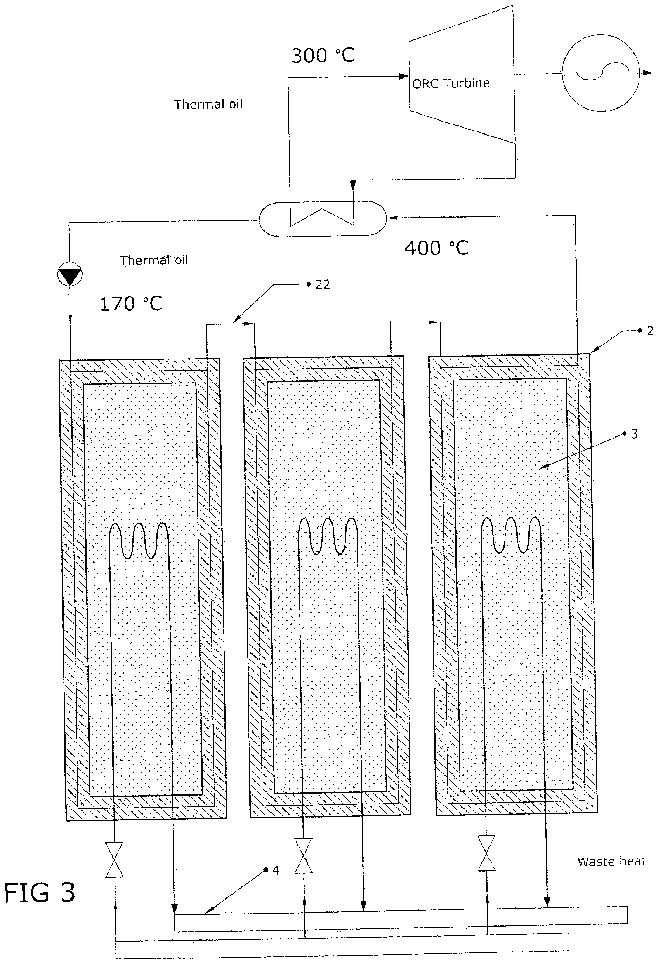

Figure 3 represents an example of the invention's application for storing waste heat from processes in metallurgical production, utilizing oily mill scale waste. The illustration depicts three sections, each measuring 6 meters in length, 2 meters in width, and 2 meters in height. The design of the sections follows the concept outlined in Figure 1. These sections are parallelly charged with steam at a maximum temperature of 400°C.

The stored heat, with a total capacity of 30 MWh at a temperature difference of T10 - T9 minimum 200°C, enables continuous production of approximately 200 kWh of electrical energy on an ORC turbine for approximately 36 hours. In this specific example, the sections do not utilize electric heating, which is primarily intended for balancing deviations in the power grid.

This exemplary solution is well-suited for applications where waste heat fluctuates, as is often the case in systems like Flare Gas Recovery. The application of thermal heat storage can significantly decrease the maximum recovery installed power, leading to enhanced economic efficiency in such scenarios.

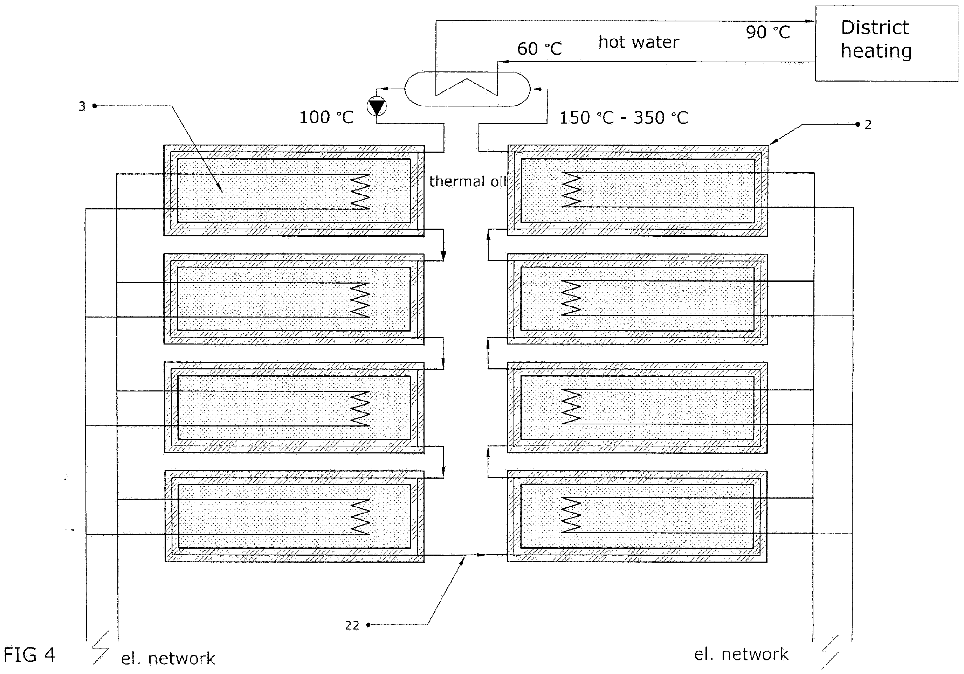

Figure 4 illustrates the embodiment of the invention through eight thermal energy storage units, each measuring 6 x 2 x 2 meters and filled with oily mill scale waste. This design is specifically tailored to address the demand for short-term storage of excess electrical energy in the network during the shutdown of an electric arc furnace in a steelworks. The configuration enables the temporary capture of deviations up to 200 MW in the form of thermal energy for approximately 15 minutes. This captured thermal energy is continuously utilized in this example to supply hot water for centralized heating.

This example demonstrates the practical application of the invention, showcasing its capability to provide storage solutions ranging from tens to even hundreds of MWh.

Overall, the present invention represents a significant advancement in waste material integration into thermal energy storage systems. It offers a sustainable and effective solution for energy management, contributing to enhanced economic viability and environmental benefits.

## Claims

1. A thermal energy storage system comprising:
a containment structure with a top opening for access,
oily mills scale waste material with specific water content and iron composition.
integrated bundle pipes within concrete walls and bottom of the containment structure.
charging and discharging systems for thermal energy accumulation.
evaporation system for reducing water content in the oily sludges and mill scale during operation, which is not necessary if low-water-content oily mill scale is used.

2. The thermal energy storage system of claim 1, wherein the charging system includes:
Heat exchanger exchange surfaces immersed in the oily mill scale for direct contact with the accumulator material.

3. The thermal energy storage system of claim 1, further comprising:
a control system for managing the thermal energy storage process.
and hybrid accumulation method allowing simultaneous connection to both thermal and electrical networks.

4. The thermal energy storage system of claim 1, wherein the concrete walls of containment serve as a secondary accumulator material.

5. A method for thermal energy storage comprising:
providing a containment structure with a top opening for access.
introducing oily mill scale waste material with specific water content and iron composition into the containment structure.
integrating bundle pipes within the concrete walls and bottom of the containment structure.
utilizing charging and discharging systems for thermal energy accumulation.
employing an evaporation system for reducing water content in the oily sludges and mill scale during operation.
